(19) Europäisches Patentamt
European Patent Office
Office européen des brevets

(11) EP 4 224 556 A1

(12) # EUROPEAN PATENT APPLICATION
published in accordance with Art. 153(4) EPC

(43) Date of publication:
**09.08.2023 Bulletin 2023/32**

(21) Application number: **21875625.2**

(22) Date of filing: **28.09.2021**

(51) International Patent Classification (IPC):
***H01M 4/13*** *(2010.01)* ***H01M 4/36*** *(2006.01)*
***H01M 4/38*** *(2006.01)* ***H01M 4/48*** *(2010.01)*
***H01M 4/485*** *(2010.01)* ***H01M 4/58*** *(2010.01)*
***H01M 4/587*** *(2010.01)* ***H01M 4/62*** *(2006.01)*
***H01M 10/052*** *(2010.01)*

(52) Cooperative Patent Classification (CPC):
**H01M 4/13; H01M 4/36; H01M 4/38; H01M 4/48; H01M 4/485; H01M 4/58; H01M 4/587; H01M 4/62; H01M 10/052;** Y02E 60/10

(86) International application number:
**PCT/JP2021/035662**

(87) International publication number:
**WO 2022/071324 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2020 JP 2020165714**
**30.11.2020 JP 2020199070**
**30.11.2020 JP 2020199071**
**30.11.2020 JP 2020199073**

(71) Applicant: **Panasonic Intellectual Property Management Co., Ltd.**
**Osaka-shi, Osaka 540-6207 (JP)**

(72) Inventors:
- **SHIBUTANI, Satoshi**
**Osaka-shi, Osaka 540-6207 (JP)**
- **NAKAYAMA, Takahito**
**Osaka-shi, Osaka 540-6207 (JP)**
- **UCHIDA, Shuhei**
**Osaka-shi, Osaka 540-6207 (JP)**

(74) Representative: **Novagraaf International SA**
**Chemin de l'Echo 3**
**1213 Onex, Geneva (CH)**

(54) **SECONDARY BATTERY**

(57) The disclosed secondary battery includes a positive electrode and a negative electrode, wherein the negative electrode includes a first layer including at least a negative electrode active material layer, and the first layer further includes a fire retardant including a halogen atom.

EP 4 224 556 A1

*FIG. 2*

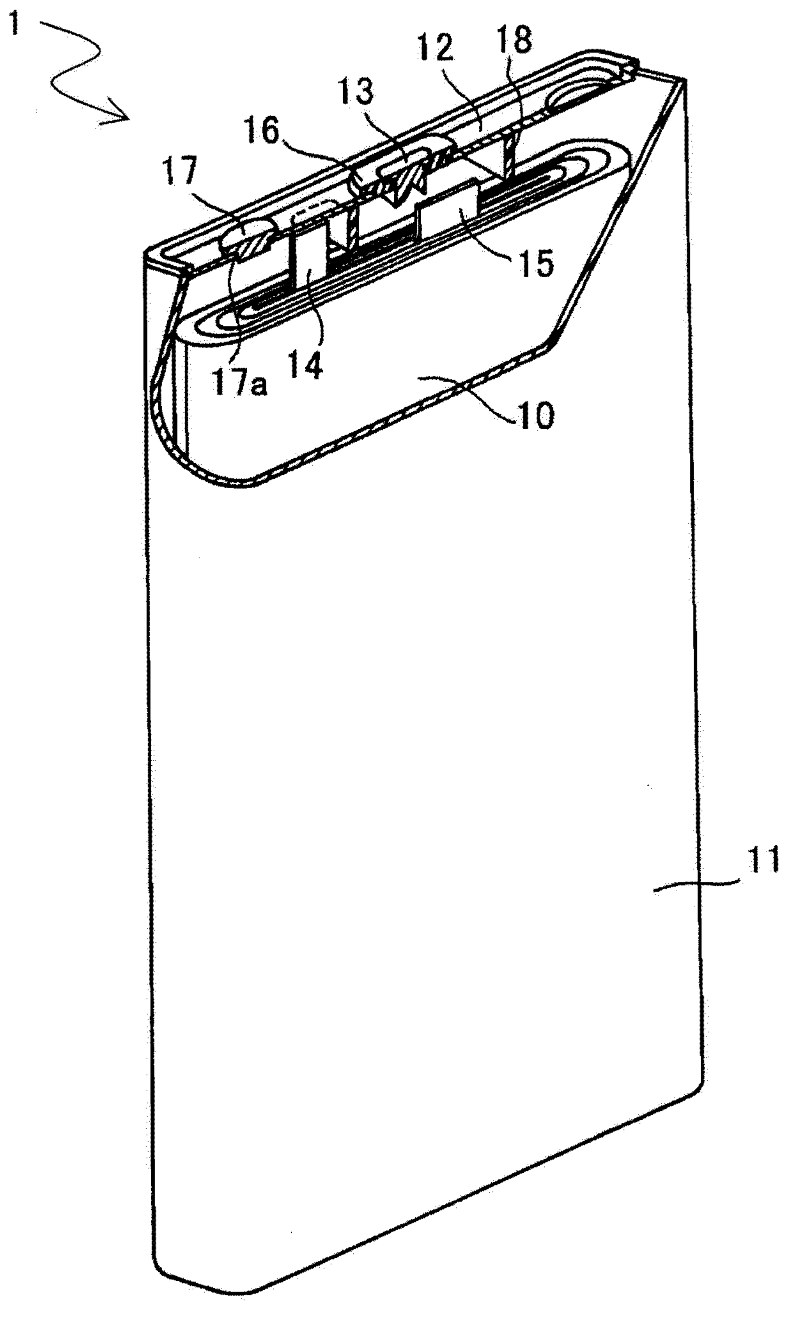

## Description

[Technical Field]

The present disclosure relates to a secondary battery.

[Background Art]

Non-aqueous electrolyte secondary batteries such as lithium ion secondary batteries have a high output and a high energy density. Therefore, non-aqueous electrolyte secondary batteries are used as a power source for small consumer applications, power storage devices, and electric vehicles

For the negative electrode active material of non-aqueous electrolyte secondary batteries, conventionally, various materials have been proposed. As a negative electrode active material with a high energy density, use of a silicon compound (e.g., silicon oxide) that forms an alloy with lithium, and silicon particles has been proposed conventionally. For example, Patent Literature 1 has disclosed a non-aqueous secondary battery, wherein the positive electrode includes a positive electrode mixture layer containing a Li-containing transition metal oxide with essential elements such as Ni and Mn, and the negative electrode includes a negative electrode mixture layer containing a material with Si and O as essential elements (atomic ratio x of O to Si is $0.5 \leq x \leq 1.5$) and graphite, and in the negative electrode mixture layer, setting a total of a material containing Si and O as essential elements and graphite as 100 mass%, a ratio of the material containing Si and O as the essential elements is 3 to 20 mass%.

[Citation List]

[Patent Literature]

PLT1: Japanese Laid-Open Patent Publication No. 2010-212228

[Summary of Invention]

[Solution to Problem]

Recently, demand for a high energy density non-aqueous electrolyte secondary battery has been increasing even more. However, when the energy density of the non-aqueous electrolyte secondary battery is increased, battery safety measures in abnormal situations are required at a high level.

MEANS FOR SOLVING THE PROBLEM

An aspect of the present disclosure relates to a secondary battery. The secondary battery includes a positive electrode and a negative electrode, the negative electrode includes a first layer including a negative electrode active material, and the first layer further includes a fire retardant including a halogen atom.

[Effects of Invention]

The present disclosure achieves a highly safe secondary battery.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

[FIG. 1] FIG. 1 is a schematic cross sectional view illustrating an example of a negative electrode configuration in an embodiment of a secondary battery of the present disclosure.

[FIG. 2] FIG. 2 is a schematic partially cutaway oblique perspective view of a secondary battery of an embodiment of the present disclosure.

[Description of Embodiments]

In the following, examples of the embodiment of the present disclosure are described. In the following, examples are illustrated for embodiments, but the present disclosure is not limited to the examples below. In the following description, specific numerical values and materials may be exemplified, but other numerical values and other materials may be used as long as the effect of the present disclosure is obtained. In this specification, "range of numeral value A to numeral value B" includes the numeral value A and numeral value B in the range.

(Secondary battery)

The secondary battery of this embodiment includes a positive electrode and a negative electrode. The negative electrode includes a first layer including a negative electrode active material. The first layer generally is disposed at a surface of the negative electrode current collector. The first layer further includes, in addition to the negative electrode active material, a fire retardant including a halogen atom. The first layer may further include a carbon nanotube. The fire retardant and halogen atom are each may be referred to as "fire retardant (R)" and "halogen atom (Ha)" in the following. The secondary battery of this embodiment may be referred to as "secondary battery (S)" in the following. The secondary battery (S) may be a non-aqueous electrolyte secondary battery.

The negative electrode active material may include, in an embodiment, particles (P) and graphite. Here, the particles (P) are at least one type of particles selected from the group consisting of: first particles including silicon oxide represented by a formula $SiO_x$ ($0.5 \leq X< 1.6$), second particles including a lithium silicate phase and silicon particles dispersed in the lithium silicate phase, and third particles including a carbon phase and silicon particles dispersed in the carbon phase. In this specification, the silicon particles included in the second particles can be regarded as a silicon phase, and the silicon particles included in the third particles can be regarded as a silicon phase.

By using the particles (P) including silicon (Si) as the negative electrode active material, the battery capacity can be increased. Meanwhile, as described in Examples, the inventors of the present application found that when the particles (P) are used, the battery temperature tends to increase under an abnormal situation (e.g., in nail penetration test). Furthermore, the inventors of the present application found that the battery temperature increase under an abnormal situation can be suppressed by using a specific fire retardant without greatly reducing battery characteristics. The present disclosure is based on such new findings.

The lithium silicate phase in the second particles may include lithium silicate represented by a formula $Li_{2Z}SiO_{(2+Z)}$ ($0 < Z< 2$). The details of the second particles are to be described later.

The negative electrode active material may have a particle (P) content of 1 mass% or more. With this configuration, even higher capacity can be achieved compared with a case where the negative electrode active material is only graphite. The negative electrode active material may have a particle (P) content of 3 mass% or more. The content may be 50 mass% or less. These lower limits and upper limits can be used in any combinations, as long as it is noncontradictory.

The negative electrode active material may include plural types of particles selected from the group consisting of first particles, second particles, and third particles. For example, the particles (P) may include two types of particles selected from these, or all of three types of particles. Specifically, the negative electrode active material may include the first particles and second particles, the first particles and third particles, or the second particles and third particles. Alternatively, the negative electrode active material may include all of the first, second, and third particles.

The graphite content in the negative electrode active material may be in the range of 50 to 99 mass%. When the particles (P) include graphite on the surface and/or inside thereof, the graphite thereof is not included in the above-described graphite content. The graphite content accounts for the graphite not included in the particles (P).

When the mass ratio between the negative electrode active material and the fire retardant (R) in the first layer is represented by, negative electrode active material: fire retardant (R) = 100: a, a may be larger than 0 and less than 15. With this configuration, safety can be improved without greatly reducing the battery capacity. The value of "a" may be 0.1 or more, 0.5 or more, or 1 or more. The value of "a" may be 10 or less, 5 or less, less than 5, or 3 or less. These lower limits and upper limits can be used in any combination as long as it is noncontradictory. For example, the value of "a" may be in the range of, 1 or more and 5 or less (or 1 or more and less than 5), more preferably 1 or more and 3 or less. In this case, while suppressing heat generation, a high capacity can be maintained, and a high charge/discharge performance and high safety can be both achieved.

The negative electrode active material content in the first layer can be determined from a sample obtained by taking out only the negative electrode active material layer from a secondary battery in a discharged state. Specifically, first, a secondary battery in a discharged state is disassembled and the negative electrode is taken out. Then, the negative electrode is washed with an organic solvent, and further dried under vacuum, and then removing only the negative electrode active material layer to obtain a sample. The sample is subjected to thermal analysis such as TG-DTA, by which the ratio of binder component and conductive agent component other than the negative electrode active

material can be calculated. The ratio of the fire retardant (R) in the negative electrode active material layer can be determined by element analysis such as SEM-EDX (Energy Dispersive X-ray Spectroscopy) on cross sections of the negative electrode active material layer.

In an embodiment of the present disclosure, the fire retardant (R) may be present locally more on the surface side of the first layer. In this case, the first layer includes, for example, the second layer including at least the negative electrode active material, and the third layer including at least the fire retardant (R) and disposed on the surface of the second layer. The third layer has a fire retardant content of larger than the fire retardant content of the second layer. Here, the retardant content means a fire retardant molarity included in a unit volume (apparent volume) of the second layer or third layer, and can be measured by performing element analysis such as, for example, SEM-EDX, on cross sections of the first layer (second layer and third layer) to obtain distribution of the fire retardant in the thickness direction. From the distribution in the thickness direction, if the fire retardant is locally present on the second layer side can be determined. In an embodiment, the second layer may be the negative electrode active material layer (negative electrode mixture layer) including at least the negative electrode active material, and the third layer may be the fire retardant layer including at least the fire retardant (R). The negative electrode active material layer as the second layer may include carbon nanotube as a conductive agent.

Preferably, the negative electrode active material included in the second layer as the negative electrode active material layer satisfies at least one of conditions (i) and (ii) below.

Condition (i):

The negative electrode active material includes particles (P) and graphite. The particles (P) are at least one type selected from the group consisting of the first particles, second particles, and third particles described above.

Condition (ii):

The negative electrode active material includes a metal lithium.

When the condition (i) is satisfied, by using the particles (P) including silicon (Si) as the negative electrode active material, the battery capacity can be increased. Meanwhile, when the particles (P) are used, the battery temperature under an abnormal situation (e.g., at nail penetration test) easily increases. Thus, the suppression of the battery temperature increase of a battery under an abnormal situation is an important problem to be solved.

When the condition (ii) is satisfied, similarly to the conditions (i), the battery can achieve a high capacity. However, in this case, lithium metal deposits during charging in the negative electrode, and therefore a safety measure under an abnormal situation is required at a high level.

With this embodiment, by disposing the fire retardant layer with which a specific fire retardant is provided, at a surface of the negative electrode active material layer, the battery temperature increase under an abnormal situation can be suppressed without greatly reducing battery characteristics.

The negative electrode active material may include plural types of particles selected from the group consisting of first particles, second particles, and third particles. For example, the particles (P) may include two types of particles selected from these, or all of three types of particles. Specifically, the negative electrode active material may include the first particles and second particles, the first particles and third particles, or the second particles and third particles. Alternatively, the negative electrode active material may include all of the first, second, and third particles.

The negative electrode active material may have a particle (P) content of 1 mass% or more. With this configuration, even higher capacity can be achieved compared with a case where the negative electrode active material is only graphite. The negative electrode active material may have a particle (P) content of 3 mass% or more. The content may be 50 mass% or less. These lower limits and upper limits can be used in any combinations, as long as it is noncontradictory. When the particles (P) include plural types of particles selected from the group consisting of the first particles, second particles, and third particles, the negative electrode active material may contain 1 mass% or more of at least one of the plural types of particles.

The third layer as the fire retardant layer includes a fire retardant (R) including a halogen atom (Ha). The negative electrode having the third layer can suppress excessive heat generation under an abnormal situation. The fire retardant (R) does not have electron conductivity, and therefore in the secondary battery, with the presence of the third layer interposed between the negative electrode active material layer and separator, the third layer acts as a resistant layer that suppresses short circuit, even under a circumstance where a short circuit may occur in the battery. In this manner, heat generation can be suppressed effectively.

Preferably, the third layer is disposed at a surface of the second layer so as to contact the surface of the negative electrode active material layer as the second layer of the negative electrode and cover at least a portion of the negative electrode active material layer.

The third layer may include, other than the fire retardant (R), a binder. By including the binder in the third layer,

binding properties of the fire retardant (R) between the particles thereof and to the second layer as the negative electrode active material layer can be improved. That is, the third layer can be brought into contact with the second layer closely. The binder is not particularly limited, and for example, polyvinylidene fluoride (PVdF), ethylene dimethacrylate, methacrylic acid allyl, t-dodecylmercaptan, α-methylstyrene dimer, and methacrylic acid are used. When polyvinylidene fluoride (PVdF), ethylene dimethacrylate, methacrylic acid allyl, t-dodecylmercaptan, α-methylstyrene dimer, and methacrylic acid are used for the binder, by applying a pressure and/or heat to the third layer, the negative electrode can be brought into contact with the separator.

The third layer may include other particles other than the fire retardant (R) and binder. Examples of the other particles include inorganic particles including metal oxides of alumina, boehmite, titania, and the like. The inorganic particles including metal oxide function as a spacer, and can suppress the amount of the fire retardant added. Preferably, the inorganic particles have an average particle size of 0.01 μm to 5 μm, more preferably 1/2 or less of the average particle size of the fire retardant (R).

In the third layer, the fire retardant (R) can be present in forms of an agglomerate of coagulated particles of the fire retardant, or an agglomerate of coagulated particles of the fire retardant (R) through a binder. The fire retardant layer (R) may partially cover the surface of the second layer, or the third layer may cover almost all of the surface of the negative electrode active material layer. The coverage (based on area) of the second layer surface with the third layer can be, in terms of suppressing the battery temperature increase under an abnormal situation, 5% or more, 10% or more, or 30% or more, and preferably 50% or more.

Even when the coverage of the second layer surface with the third layer is 100% and the surface of the second layer is completely covered with the third layer, the gap between the third layer particles is sufficiently large compared with the size of lithium ion, and therefore lithium ion can move through the gap so as not to hinder charge/discharge. However, in view of suppressing increase in the battery resistance, the second layer surface may be covered with the third layer by a coverage of 90% or less or 80% or less.

The second layer surface may be covered with the third layer by a coverage of 5% or more and 90% or less, 10% or more and 90% or less, 30% or more and 90% or less, 50% or more and 90% or less, or 50% or more and 80% or less.

The coverage with third layer can be determined by element mapping on the electrode surface with SEM-EDX and the like. For example, by the element mapping on the fire retardant (R) particles and negative electrode active material, the coverage of the second layer surface with the third layer can be calculated.

In the third layer, the fire retardant (R) particles may have an average particle size (when agglomerate, average particle size of primary particles of the agglomerate) of 0.01 μm to 5 μm, or 0.05 μm to 3 μm. The fire retardant (R) average particle size can be determined as follows. First, 20 fire retardant (R) particles are randomly selected from an SEM image of the negative electrode surface. Then, the grain boundaries of the selected 20 particles are observed, and upon specifying the contour of the particles, the long diameter of each of the 20 particles is determined, and their average value is regarded as an average particle size of the fire retardant (R) particles. When the third layer includes other particles other than the fire retardant (R), the average particle size of the other particles can be determined by the same method.

Preferably, the third layer has a basis weight of, in view of suppressing the battery temperature increase in an abnormal situation, 0.1 g/$m^2$ or more, more preferably 0.3 g/$m^2$ or more or 1 g/$m^2$ or more. Preferably, the third layer has a basis weight of, in view of suppressing the battery resistance increase, 10 g/$m^2$ or less. These lower limits and upper limits can be used in any combinations, as long as it is noncontradictory. The basis weight of the third layer is obtained by dividing the mass (g) of the third layer by the surface area of the second layer (negative electrode active material layer) on which the third layer is disposed (when coverage is less than 100%, including region where the second layer is exposed).

The third layer can be formed by depositing a mixture including at least particles constituting the third layer and binder on the negative electrode active material layer surface. The mixture may be a slurry including the fire retardant (R) particles, binder, and solvent (dispersion medium). The third layer can be formed by spraying, dropping, or applying the slurry on the surface of the negative electrode active material layer and drying. By adjusting the amount of solvent relative to the fire retardant (R) particles in the slurry and /or the amount of the slurry applied, the coverage with the third layer and basis weight (thickness) can be controlled.

In the third layer, the fire retardant (R) ratio in the third layer as a whole may be, based on mass, 50% or more, 60% or more, 70% or more, 80% or more, or 90% or more. The fire retardant (R) ratio in the third layer as a whole may be, based on mass, 100% or less, or 95% or less. These lower limits and upper limits can be used in any combinations, as long as it is noncontradictory. The fire retardant (R) ratio in the third layer can be determined by element analysis such as SEM-EDX on the cross sections of the fire retardant layer.

Preferably, the third layer has a thickness of, in terms of suppressing the battery temperature increase in an abnormal situation, 0.1 μm or more, 1 μm or more, or more preferably 3 μm or more. Preferably, the third layer has a thickness of, in terms of suppressing increase in the battery resistance, 10 μm or less. These lower limits and upper limits can be used in any combinations, as long as it is noncontradictory. The third layer thickness is an average thickness

in a region where the surface of the second layer (negative electrode active material layer) is covered with the third layer, and can be determined based on SEM images on cross sections of the negative electrode.

The second layer including at least the negative electrode active material may further include carbon nanotube. In an embodiment, the first layer includes a second layer including at least a negative electrode active material and carbon nanotube, and a third layer including at least a fire retardant, and the third layer is disposed between the second layer and a separator interposed between the positive electrode and negative electrode. With this embodiment, by disposing the fire retardant layer with which a specific fire retardant is provided, between the separator and the negative electrode active material layer, the battery temperature increase in an abnormal situation can be suppressed without greatly reducing battery characteristics.

[Fire retardant (R)]

The fire retardant (R) exhibits fire retarding effects by releasing halogen atoms (Ha) under high temperature. Therefore, the secondary battery (S) can suppress excessive heat generation in an abnormal situation.

The fire retardant (R) may satisfy at least one of the following conditions (1) and (2). Preferably, however, the fire retardant (R) satisfies both of the conditions (1) and (2) below.

(1) The fire retardant (R) includes a cyclic structure to which a halogen atom (Ha) is bonded. The cyclic structure may be an aromatic ring, or may not be an aromatic ring. In this case, all of the halogen atoms (Ha) may be bonded to the cyclic structure, or only a part of the halogen atoms (Ha) may be bonded to the cyclic structure. Preferably, the structure in which a halogen atom (Ha) is bonded to the cyclic structure is used, in terms of easily increasing the halogen atom content.

(2) The halogen atom (Ha) ratio in the fire retardant (R) is 45 mass% or more. The ratio may be 60 mass% or more (e.g., 70 mass% or more). Without particular limitation on the upper limit, it may be 95 mass% or less (e.g., 90 mass% or more). These lower limits and upper limits can be used in any combination.

A structural formula of ethylene-1 ,2-bispentabromophenyl as an example of the fire retardant (R), is shown below. Ethylene-1,2-bispentabromophenyl has a molecular weight of 971.2, and includes 10 bromine atoms (atomic weight: 79.9). Therefore, the ratio of the halogen atom (Ha) in ethylene-1 ,2-bispentabromophenyl is $100 \times 10 \times 79.9/971.2 = 82.3$ mass%.

[Chem 1]

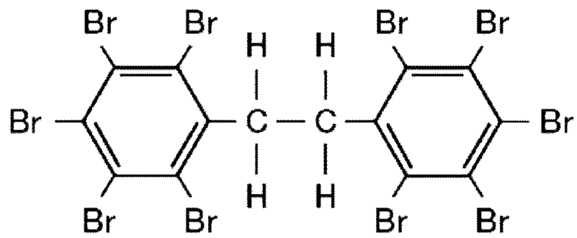

The halogen atom (Ha) is not particularly limited, and preferable examples of halogen atom (Ha) include bromine (Br), fluorine (F), and chlorine (Cl). In terms of the fact that fire retarding effects can be expected from an initial period of abnormal heat generation, halogen atom (Ha) may be bromine and/or fluorine, or bromine.

It is considered that in the exothermic reaction in an abnormal situation in an initial period, reactions in the negative electrode play a major role, and by adding a material that exhibits fire retarding effects to the negative electrode, the exothermic reaction is effectively suppressed, and safety can be improved. In an initial period of exothermic reaction, electrolyte reacts to the negative electrode having a larger reaction area than the positive electrode with priority, to generate H radical, and the H radical reacts with other products repeatedly with acceleration. By deactivating the H radical with the fire retardant (R) including halogen atoms (Ha) added to the negative electrode, the exothermic reactions are suppressed.

Also, the fire retardant (R) including such halogen atom (Ha) has a larger specific gravity compared with a conventionally used phosphorus-based fire retardant, and therefore the volume relative to the added weight can be made small. In this manner, while adding sufficient amount of fire retardant, the loading amount of the negative electrode active material can be kept high, and a high capacity can be maintained. Preferably, in terms of a large specific gravity, the fire retardant (R) preferably includes bromine (Br). With regard to the number of the halogen atom (Ha) bonding in the fire retardant (R), the larger the better. The fire retardant (R) easily has a large specific gravity by halogen atom (Ha) bonding with the cyclic structure. Preferably, the fire retardant (R) has a specific gravity of, for example, 2.7 or more, or

3.0 or more.

Preferably, the fire retardant (R) does not include, in the compound structure, a portion that generates water and/or a hydrophilic group. In this case, in the production steps of the secondary battery, water does not easily enter into the battery, and a reliable excellent secondary battery can be achieved. Examples of the portion that generates water include a hydroxy group (-OH), carboxyl group (-COOH), carbonyl group (-CO-), and oxoacid group such as sulfo group, phosphoric acid group. Examples of the hydrophilic group include, in addition to the above-described functional group, an amino group.

When the negative electrode active material including silicon (Si) is used, the halogen atom (Ha) included in the fire retardant (R) reacts with Si, which may form a stable coating on the surface of the negative electrode active material. In this manner, high cycle characteristics can be kept, and high durability can be expected.

The fire retardant (R) may release halogen atoms (Ha) at a temperature of 180°C or more (e.g., 250°C or more). When a fire retardant releases halogen atom (Ha) at a relatively low temperature, halogen atoms (Ha) may be released in a non-abnormal situation, which may reduce battery characteristics. Preferably, therefore, the fire retardant (R) does not substantially release halogen atoms (Ha) under a temperature less than 180°C.

The fire retardant (R) may be at least one selected from the group consisting of ethylene-1,2-bispentabromophenyl, ethylenebistetrabromophthalimide, tetrabromobisphenol A, hexabromocyclododecane, 2,4,6-tribromophenol, 1,6,7,8,9,14,15,16,17,17,18,18-dodecachloro pentacyclo ($12.2.1.1^{6,9}.0^{2,13}.0^{5,10}$) octadeca-7,15-diene (trade name: Dechlorane Plus), and tris (2,2,2-trifluoro ethyl) phosphate. For these fire retardants (R), commercially available products may be used. Alternatively, the fire retardant (R) may be synthesized by a known synthesis method.

[First particles]

The first particles include silicon oxide represented by a formula $SiO_x$ ($0.5 \leq X < 1.6$). The first particles may include silicon oxide particles, and a carbon layer disposed surrounding the silicon oxide particles.

The first particles may have an average particle size in a range of 1 μm to 25 μm (e.g., range of 4 μm to 15 μm).

[Second particles]

The second particles include a lithium silicate phase and silicon particles dispersed in the lithium silicate phase. As described above, the lithium silicate phase may include lithium silicate represented by a formula $Li_{2Z}SiO_{(2+Z)}$ ($0 < Z < 2$), or may be formed of the lithium silicate. Preferably, Z satisfies the relation $0 < Z < 1$. 50 mass% or more (e.g., 60 mass% or more) of the lithium silicate phase may be formed of lithium silicate satisfying $0 < Z \leq 0.5$.

The second particles may include at least one element Me dispersed in the lithium silicate phase. At least one element Me is at least one selected from the group consisting of rare-earth elements and alkaline earth metal elements. Examples of the alkaline earth metal element include Mg, Ca, Sr, Ba, etc.

The element Me may be dispersed in the lithium silicate phase as Me oxide. The Me oxide may include at least one selected from the group consisting of yttrium oxide, cerium oxide, calcium oxide, and magnesium oxide. The lithium silicate phase may include zirconium oxide. The element Me may be dispersed in zirconium oxide.

For the amount of the element Me included in the second particles, the amount (presumed Me oxide amount) can be used as an indicator, which is calculated by assuming that, despite the conditions of element Me or types of the compound of element Me, element Me is forming a stoichiometric oxide. The presumed Me oxide amount may be, relative to a total of the lithium silicate phase and the silicon particles, in the range of 0.001 mass% to 1.0 mass%. By setting the presumed Me oxide amount to 0.001 mass% or more, the effects of reducing the reaction area and improving the hardness of the lithium silicate phase can be greater. Meanwhile, by setting the presumed Me oxide amount to 1.0 mass% or less, reduction in the initial capacity can be suppressed.

The lithium silicate phase may include a metal compound such as metal oxide, metal carbide, metal nitride, and metal boride. Suitable metal compounds are metal oxide and metal carbide. In particular, at least one selected from the group consisting of zirconium oxide ($ZrO_2$), aluminum oxide ($Al_2O_3$), zirconium carbide (ZrC), tungsten carbide (WC), and silicon carbide (SiC) is preferable. The amount of the metal element compound other than element Me may be, relative to a total of the lithium silicate phase and the silicon particles, in a range of 0.005 mass% to 15 mass% (e.g., range of 0.01 mass% to 10 mass% or 0.01 mass% to 1 mass%). The amount of the metal element compound can be determined, similarly with the element Me content, by calculating the amount based on the assumption that the metal element forms a stoichiometric oxide.

The second particles may have an average particle size in a range of 1 μm to 25 μm (e.g., range of 4 μm to 15 μm). In such a range, the stress based on the volume change of the second particles along with charge/discharge can be relieved easily, and excellent cycle characteristics can be easily obtained. Furthermore, surface area of the second particle becomes suitable, and capacity reduction based on side reactions with non-aqueous electrolyte can be suppressed.

The crystallite size of the silicon particles dispersed in the lithium silicate phase is, for example, 10 nm or more. The silicon particles have a phase of simple silicon (Si) particles. When the silicon particles have a crystallite size of 10 nm or more, the silicon particles have a small surface area, and therefore deterioration of silicon particles which generates irreversible capacity is hardly caused. The crystallite size of the silicon particles is calculated by the Sheller's equation from the half width of the diffraction peak assigned to the Si (111) plane in the X-ray diffraction (XRD) pattern of the silicon particles.

The silicon particles in the second particles may have an average particle size of, before initial charging, preferably 500 nm or less (more preferably 200 nm or less, even more preferably 50 nm or less). After the initial charging, the silicon particles have an average particle size of preferably 400 nm or less (more preferably 100 nm or less). By micronizing the silicon particles, the volume change during charging and discharging becomes small, and structural stability of the second particles further improves.

In view of a high capacity and improvement in cycle characteristics, the second particles may have a silicon particle (simple element Si) content of preferably in a range of 20 mass% to 95 mass% (e.g., in a range of 35 mass% to 75 mass%). With this range, lithium ion diffusivity is excellent, and excellent load characteristics can be easily achieved. Furthermore, the surface of the silicon particle not covered with the lithium silicate phase and exposed is reduced, and side reactions between the non-aqueous electrolyte and silicon particles are suppressed.

The second particles may include a conductive material covering at least a portion of the surface thereof. Since the lithium silicate phase has poor electron conductivity, the electrical conductivity of the second particles tends to be low. By coating the surfaces with the conductive materials, the electronic conductivity can be dramatically enhanced. Preferably, the conductive layer is thin enough that it does not substantially affect the average particle size of the second particles. In view of ensuring electrical conductivity and lithium ion diffusivity, the thickness of the conductive layer may be, for example, 1 nm to 200 nm (e.g., in a range of 5 nm to 100 nm). Examples of the materials and the forming method of the conductive layer are to be described later.

[Third particles]

The third particles include a carbon phase and silicon particles dispersed in the carbon phase. The carbon phase of the third particles may be formed of amorphous carbon. The amorphous carbon may be a hard carbon or a soft carbon, or something else. The amorphous carbon is, generally, a carbon material with an average plane spacing d002 of (002) plane measured by X-ray diffractometry of more than 0.34 nm.

The third particles include a carbon phase, and silicon particles dispersed in the carbon phase. The carbon phase in the third particles has electrical conductivity. Therefore, even when gaps are formed around the third particles, contact points between the third particles and surroundings can be kept easily. As a result, reduction in the capacity with repetitive charge/discharge cycles is easily suppressed.

The third particles may have an average particle size of 3 μm or more and 18 μm or less, 6 μm or more and 15 μm or less, or 8 μm or more and 12 μm or less.

The third particles may have a silicon particle content of 30 mass% or more and 80 mass% or less, or 40 mass% or more and 70 mass% or less. With such a range, the negative electrode can achieve a sufficient high capacity, and cycle characteristics are easily improved.

The silicon particles in the third particles may have an average particle size of, for example, 1 nm or more. The silicon particles may have an average particle size of 1000 nm or less, 500 nm or less, 200 nm or less, or 100 nm or less (or even 50 nm or less). With finer silicon particles, the volume change of the third particles during charging and discharging becomes smaller, and structural stability of the third particles improves.

The composition, and the component content of the second and third particles can be analyzed by the method described in WO2018/179969.

The content of the elements contained in the particles (P) can be measured, for example, by inductively coupled plasma emission spectroscopic analysis (ICP-AES). Specifically, the particles (P) are dissolved in a heated acid solution, and carbon in the solution residue is removed by filtering, and thereafter, the obtained filtrate is analyzed by ICP-AES to measure the spectrum intensity of each element. Subsequently, a calibration curve is prepared using standard solutions of commercially available elements, and the content of each element is calculated.

The second particles and third particles both have a sea-island structure. The silicon particles (island) of the second and third particles are dispersed in a matrix (sea) of the silicate phase and carbon phase respectively, being covered with the lithium ion conductive phase (silicate phase and carbon phase). In the sea-island structure, contact between the silicon particles and electrolyte is limited, and therefore side reactions are suppressed. Also, the stress caused by expansion and contraction of the silicon particles is relieved in the matrix of the lithium ion conductive phase.

[Graphite]

Examples of the graphite include natural graphite, artificial graphite, graphitized mesophase carbon particles, and the like. For the graphite, known graphite used as the negative electrode active material may be used.
The graphite is a material having developed graphite-type crystal structures, and may be, for example, a carbon material having an average interplanar spacing d002 of (002) plane measured by X-ray diffractometry of 0.340 nm or less.
The graphite (graphite particles) included in the negative electrode as the active material may have an average particle size of 13 μm or more and 25 μm or less. Preferably, the graphite has an average particle size larger than the average particle size of the particles (P). With this configuration, gaps are formed between relatively large graphite particles, and the particles (P) are easily accommodated in the gap. Therefore, filling rate of the active material in the negative electrode can be increased easily, and a negative electrode with an even higher capacity can be obtained easily. The particles (P) present in the gaps contribute to maintaining electron contacts between the graphite particles. Meanwhile, even when the particles (P) present in the gaps go through expansion and contraction, it can hardly cause expansion and contraction of the negative electrode as a whole, and therefore deterioration based on charge/discharge cycles are hardly caused.
In the negative electrode active material layer, the average particle size of the particles (P), the silicon particles in the particles (P), and the graphite each can be measured by observation using SEM or TEM on cross sections of the negative electrode active material layer. In that case, the average particle size can be determined by averaging the maximum diameter of any 100 particles.
For the average particle size of the particles (P) before forming the negative electrode mixture (negative electrode active material layer), a median diameter ($D_{50}$) at which the cumulative volume is 50% in the volume-based particle size distribution can be used. The median diameter can be determined using, for example, a laser diffraction/scattering particle size distribution analyzer.

[First particles production method]

The first particles can be produced, for example, by the following method. First, the particles of a composition of SiO (silicon monoxide) are ground and classified to adjust the particle size. Then, the surface of the obtained particles are covered with carbon by CVD under an argon atmosphere. Then, they are milled and classified to prepare first particles represented by $SiO_X$. For the method of covering the $SiO_X$ particles with carbon, various known methods can be used. The covering of the $SiO_X$ particles with carbon can be omitted.

[Second particles production method]

Next, an example of the second particle production method is described in detail. The second particles can be produced by a production method other than the method described below. The second particles can be produced by the method described in WO2018/179969.
The second particles are generally synthesized by two processes, a preliminary step of obtaining lithium silicate, and a later step of obtaining second particles from lithium silicate and a raw material silicon. When the element Me is added, the element Me may be added to the raw material of lithium silicate in the preliminary step, but preferably added in the later step so that lithium silicate synthesis is not affected. Preferably, more specifically, the second particles production method includes a step (i), in which silicon dioxide and a lithium compound are mixed and the produced mixture is baked to obtain lithium silicate, and a step (ii), in which lithium silicate and a raw material silicon (as necessary also element Me) are formed into a composite to obtain second particles including a lithium silicate phase and silicon particles dispersed in the lithium silicate phase.

[Step (i)]

The value of z of the lithium silicate represented by a formula: $Li_{2Z}SiO_{2+Z}$ can be controlled with the atomic ratio Li/Si of silicon to lithium in the mixture of silicon dioxide and the lithium compound. Preferably, to synthesize excellent lithium silicate with less elution of an alkaline component, Li/Si is set to be smaller than 1.
For the lithium compound, for example, lithium carbonate, lithium oxide, lithium hydroxide, lithium hydride, or the like can be used. A kind of these may be used singly, or two or more kinds thereof may be used in combination.
Preferably, the mixture including silicon dioxide and lithium compound is heated in air at 400°C to 1200°C, preferably 800°C to 1100°C to allow silicon dioxide to react with the lithium compound.

[Step (ii)]

Next, the lithium silicate and the raw material silicon are formed into a composite. For example, while applying a shearing force to the mixture of lithium silicate and the raw material silicon (also element Me may be included), the mixture can be ground. As the raw silicon, coarse particles of silicon having an average particle size of about several μm to several tens of μm may be used. Preferably, the silicon particles to be obtained in the end are controlled so that their crystallite size calculated by the Sheller's equation from the half width of the diffraction peak assigned to the Si (111) plane in the XRD pattern is 10 nm or more.

For the material of the element Me used in preparation, oxide, oxalate, nitrate, sulfate, halide, carbonate, and the like of the element Me can be used. In particular, in terms of stability and excellent ion conductivity, Me oxide is preferable. To be more specific, $CeO_2$, $Sc_2O_3$, $Y_2O_3$, $Er_2O_3$, $Tm_2O_3$, $Yb_2O_3$, $Lu_2O_3$, and the like are used. Also, a compound including elements other than the element Me and oxygen such as yttria-stabilized zirconia can be used. A kind of these may be used singly, or two or more kinds thereof may be used in combination.

For example, the lithium silicate and the raw material silicon (as necessary, also compound of element Me) are mixed at a predetermined mass ratio, and using a grinder such as a ball mill, the mixture can be stirred while making them into fine particles. However, the composite production steps are not limited to these. For example, without using the grinder, silicon nanoparticles and lithium silicate nanoparticles (as necessary compound of element Me) are synthesized, and mixed.

Then, the mixture formed into fine particles are heated at, for example, in an inert atmosphere (e.g., atmosphere of argon, nitrogen), at 450°C to 1000°C, and baked. At this time, a pressure can be applied to the mixture with a hot press and baked, to produce a sintered product of the mixture. Lithium silicate is stable at 450°C to 1000°C, and generally does not react with silicon, and therefore a capacity reduction that may occur is minute. Upon sintering, silicate melts and flows to fill the gaps between the silicon particles. As a result, a dense block of sintered product having a silicate phase as a sea-portion, and silicon particles as an island-portion can be obtained.

The sintered product is then ground until particulate, to be used as the second particles. At this time, the grinding conditions are suitably selected, to produce the second particles with the average particle size in the above-described range.

After the step (ii), a step (iii) may be performed, in which at least a portion of the surface of the second particle is covered with a conductive material to form a conductive layer. Preferably, the conductive material is stable electrochemically, and a carbon material is preferable. The surface of particle material can be covered with the carbon material by a CVD method, in which a hydrocarbon gas such as acetylene and methane is used as a raw material. Alternatively, a coal pitch, a petroleum pitch, a phenol resin, or the like is mixed with the second particles and heated. Also, carbon black can be attached to the surface of the second particles.

A step of washing the second particles with acid can be performed. For example, the second particles can be washed with an acidic aqueous solution. The washing with acid allows removal of components such as a trace amount of $Li_2SiO_3$ by dissolving, which was generated when the raw material silicon and lithium silicate are formed into a composite. As the acidic aqueous solution, an aqueous solution of an inorganic acid such as hydrochloric acid, hydrofluoric acid, sulfuric acid, nitric acid, phosphoric acid, or carbonic acid, or an aqueous solution of an organic acid such as citric acid or acetic acid can be used.

[Third particles production method]

For an example of the third particle production method, the first and second methods are described below. The third particles can be produced by a production method other than the method described below.

In the first method, first, a raw material silicon and a carbon source are mixed, and using a grinder such as a ball mill, the mixture of the raw material silicon and the carbon source are ground and formed into a composite, while making them into fine particles. An organic solvent may be added to the mixture to perform wet grinding. At this time, the raw material silicon is finely ground to produce silicon particles. The silicon particles are dispersed in a matrix of the carbon source.

For the carbon source, for example, carboxymethyl cellulose (CMC), water-soluble resin such as hydroxyethyl cellulose, polyacrylic acid salt, polyacrylamide, polyvinyl alcohol, polyethylene oxide, polyvinylpyrrolidone; saccharides such as sucrose, cellulose; petroleum pitch; coal pitch; and tar are used, without particular limitation.

As the organic solvent, an alcohol, ether, fatty acid, alkane, cycloalkane, silicate ester, metal alkoxide, or the like can be used.

Next, the composite of silicon particles and carbon source is heated in an inert gas atmosphere (e.g., atmosphere such as argon, nitrogen) to 700°C to 1200°C. By this heating, the carbon source is carbonized to produce amorphous carbon. In this manner, third particles are obtained, in which silicon particles are dispersed in a carbon phase including amorphous carbon.

In the second method, first, a raw material silicon and carbon material are mixed, and using a grinder such as a ball mill, the mixture of the raw material silicon and carbon material is ground and formed into a composite while making them into fine particles. An organic solvent may be added to the mixture to perform wet grinding. At this time, the raw material silicon is finely ground to produce silicon particles. The silicon particles are dispersed in a matrix of the carbon material.

With the above-described composition of the raw material silicon and carbon material, third particles in which silicon particles are dispersed in a carbon phase of amorphous carbon can be obtained. Afterwards, the third particles may be heated in an inert gas atmosphere to 700°C to 1200°C.

For the carbon material, amorphous carbon is preferable, and graphitizable carbon (soft carbon), non-graphitizable carbon (hard carbon), carbon black, and the like may be used. Examples of the carbon black include acetylene black and Ketjen Black. Even when graphite is used as the carbon material, the crystal structure of graphite is lost mostly when using a grinder to obtain a composite of silicon particles and the carbon material, and a carbon phase of amorphous carbon is formed.

In the following, examples of the secondary battery (S) and examples of elements of the secondary battery (S) of this embodiment are explained in detail. Known elements may be used for those elements that are not features of the present disclosure. The secondary battery (S) includes, for example, an outer case (battery case), positive electrode, negative electrode, electrolyte, and separator disposed in the outer case. The separator is disposed between the positive electrode and negative electrode.

The shape of the secondary battery (S) is not limited, and may be cylindrical, prismatic, coin shape, or button shape. The battery case is selected based on the shape of the secondary battery (S).

[Negative Electrode]

The negative electrode includes a first layer including a negative electrode active material. Typically, the negative electrode includes a negative electrode current collector, and the first layer disposed at a surface of the negative electrode current collector. The first layer may be the negative electrode active material layer (negative electrode mixture layer). In that case, the first layer includes a negative electrode active material and a fire retardant (R), and as necessary, other component other than the negative electrode active material and fire retardant (R). Examples of the other component include a binder, conductive agent, and thickener. For these other components, components used for known secondary batteries may be used. The first layer may include carbon nanotube as the conductive agent.

The first layer may be a layered structure of a second layer (negative electrode active material layer) including at least a negative electrode active material, and a third layer (fire retardant layer) including at least a fire retardant (R). In that case, the third layer is disposed at a surface of the second layer not facing the negative electrode current collector. The second layer includes the negative electrode active material and as necessary, other components. Examples of the other component include a conductive agent, binder, and thickener. For these other components, components used for known secondary batteries may be used.

When the first layer is a layered structure of the second layer (negative electrode active material layer) and third layer (fire retardant layer), the fire retardant may be included in both of the second layer and third layer. Examples of the fire retardant included in the second layer include the compound exemplified above for the fire retardant (R), and other known fire retardant other than the fire retardant (R). However, the fire retardant included in the second layer preferably is the fire retardant (R) including a halogen atom as the fire retardant included in the third layer. When the second layer and third layer both include the fire retardant (R), the fire retardant (R) included in the second layer may be the same compound as the fire retardant (R) included in the third layer, or may be a different compound.

The first layer or the second layer as the negative electrode active material layer may be formed by applying a negative electrode slurry in which a negative electrode mixture is dispersed in a dispersion medium on a surface of the negative electrode current collector to form a coating film, and drying the coating film. The dried coating film may be rolled, if necessary. Examples of the dispersion medium include water, alcohol, ether, N-methyl-2-pyrrolidone (NMP), or a mixture solvent thereof. The ratio of the components in the negative electrode mixture can be adjusted by changing the mixing ratio of the negative electrode mixture material.

Examples of the binder include fluorine resin, polyolefin resin, polyamide resin, polyimide resin, vinyl resin, styrene-butadiene copolymer rubber (SBR), polyacrylic acid, and derivatives thereof. Examples of the conductive agent include carbon black, electrically conductive fiber, fluorinated carbon, and an organic conductive material. Examples of the thickener include carboxymethyl cellulose (CMC) and polyvinyl alcohol. For these components, one type of material may be used singly, or two or more types may be used in combination.

The negative electrode active material content in the negative electrode active material layer can be determined from a sample obtained by taking out only the negative electrode active material layer from a secondary battery in a discharged state. Specifically, first, a secondary battery in a discharged state is disassembled and the negative electrode is taken out. Then, the negative electrode is washed with an organic solvent, and further dried under vacuum, and then

removing only the negative electrode active material layer to obtain a sample. The sample is subjected to thermal analysis such as TG-DTA, by which the ratio of binder component and conductive agent component other than the negative electrode active material can be calculated. By performing micro-Raman spectroscopy on cross sections of the negative electrode active material layer, types of carbon can be identified such as carbon nanotube and acetylene black, and the ratio can be calculated based on thermal analysis such as TG-DTA on a separated sample. The ratio of the fire retardant (R) in the negative electrode active material layer can be determined by element analysis such as X-ray fluorescence (XRF) on the negative electrode active material layer.

Another aspect of the present disclosure relates to a negative electrode mixture forming the first layer or the second layer as the above-described negative electrode active material layer.

Another aspect of the present disclosure relates to a negative electrode for a secondary battery including the above-described first layer including at least the negative electrode active material and fire retardant (R).

The first layer or the second layer as the negative electrode active material layer may further include carbon nanotubes. The carbon nanotubes may be further included as a conductive agent in the negative electrode active material layer. The carbon nanotubes have a significantly large aspect ratio (ratio of length relative to diameter), and therefore even a small amount can exhibit a high electrical conductivity. By using carbon nanotubes as the conductive agent, while keeping high electrical conductivity of the negative electrode active material layer, the ratio of the negative electrode active material in the negative electrode active material layer can be made high. Therefore, the secondary battery (S) can have a high capacity.

The first layer or the second layer as the negative electrode active material layer may include, in addition to carbon nanotube, at least one electrically conductive carbon material selected from the group consisting of noncrystalline carbon, and carbon fiber. The noncrystalline carbon includes hard carbon and soft carbon. Examples of the soft carbon include carbon black such as acetylene black and Ketjen Black. These materials may be combined in plurality and may be used as the conductive agent.

The negative electrode active material layer may or may not include a conductive agent other than carbon nanotube. Preferably, the negative electrode active material layer includes, in addition to carbon nanotube, carbon black as a conductive agent other than carbon nanotube. However, when they are included in a large amount, the negative electrode active material ratio in the negative electrode active material layer decreases. Therefore, the mass of the conductive agent other than carbon nanotube included in the negative electrode active material layer may be, 10 times or less (e.g., in a range of 0 to 5 times, 0 to 1 time, or 0 to 0.5 times) of the mass of the carbon nanotube included in the negative electrode active material layer.

Examples of the carbon nanotubes include carbon nanofiber. Various carbon nanotubes commercially available can be used. Alternatively, carbon nanotube may be synthesized by a known synthesis method.

Carbon nanotubes may be single walled, double walled, or multi walled. Preferably, a single wall carbon nanotube is used because a great effect can be achieved with a small amount. The carbon nanotube with a diameter of 5 nm or less includes many single wall carbon nanotubes. The single wall carbon nanotube can be 50 mass% or more of the entire carbon nanotube.

The diameter of carbon nanotube may be in the range of 0.001 to 0.05 μm, without particular limitation. The length of the carbon nanotube is not particularly limited, and in view of securing electron conductivity in the negative electrode active material layer, it may be 0.5 μm or more. Meanwhile, there is no limitation on the upper limit of the length of the carbon nanotube, as long as it is appropriately disposed in the negative electrode. In view of the fact that the negative electrode active material has a particle size of generally 1 μm or more and 25 μm or less, length of the carbon nanotube may be about the same length. That is, the length of the carbon nanotube may be, for example, 1 μm or more and 25 μm or less. For example, when a plurality of (e.g., 100 or more) of carbon nanotubes are randomly selected in the negative electrode active material layer, 50% or more (ratio in number) of the carbon nanotubes may have lengths of 1 μm or more, or, 1 μm or more and 25 μm or less. 80% or more of the lengths of the carbon nanotubes may be 1 μm or more, or, 1 μm or more and 20 μm or less.

The outer diameter and length of the carbon nanotube can be determined by image analysis using scanning electron microscope (SEM). For example, the length can be determined by measuring the lengths and diameters of a plural number of (e.g., about 100 to 1000) carbon nanotubes randomly selected, and averaging them.

As the negative electrode current collector, a non-porous conductive substrate (metal foil, etc.), and a porous conductive substrate (mesh-body, net-body, punched sheet, etc.) are used. For the material of the negative electrode current collector, stainless steel, nickel, nickel alloy, copper, copper alloy or the like can be exemplified.

[Negative electrode active material]

For the negative electrode active material, a material that is capable of electrochemically storing and releasing lithium ions is suitably used. Examples of such a material include a carbon material and a Si-containing material. A kind of negative electrode active material may be used singly, or two or more kinds thereof may be used in combination.

Examples of the carbon material include graphite, graphitizable carbon (soft carbon), and non-graphitizable carbon (hard carbon). A kind of carbon material may be used singly, or two or more kinds thereof may be used in combination. The carbon material is preferably graphite, because it has excellent charge/discharge stability, and has a small irreversible capacity. Graphite includes, for example, natural graphite, artificial graphite, graphitized mesophase carbon particles, and the like. For the graphite, known graphite used as the negative electrode active material may be used.
Examples of the Si-containing material include Si simple element, a silicon alloy, silicon compound (silicon oxide, etc.), and a composite material in which a silicon phase is dispersed in a lithium ion conductive phase (matrix). Examples of the silicon oxide include $SiO_x$ particles. X may be, for example, $0.5 \leq X< 2$, or $0.5 \leq X< 1.6$ or $0.8 \leq X \leq 1.6$. Examples of the lithium ion conductive phase include at least one selected from the group consisting of a $SiO_2$ phase, silicate phase, and carbon phase.
As an example of the Si-containing material, at least one type of particles (P) selected from the group consisting of the above described first particles including silicon oxide represented by a formula $SiO_X(0.5 \leq X< 1.6)$, the above-described second particles including a lithium silicate phase and silicon particles dispersed in the lithium silicate phase, and the above-described third particles including a carbon phase and silicon particles dispersed in the carbon phase.
By using the particles (P) including silicon (Si) as the negative electrode active material, the battery capacity can be increased. Meanwhile, when the particles (P) are used, the battery temperature under an abnormal situation (e.g., at nail penetration test) tends to increase. However, by adding the fire retardant (R), the battery temperature increase is suppressed, and high safety can be achieved.
The negative electrode active material may include plural types of particles selected from the group consisting of the first particles, second particles, and third particles. For example, the particles (P) may include two types of particles selected from these, or all of three types of particles. Specifically, the negative electrode active material may include the first particles and second particles, the first particles and third particles, or the second particles and third particles. Alternatively, the negative electrode active material may include all of the first, second, and third particles. Preferably, the particles (P) are used as the negative electrode active material in combination with graphite.
When the negative electrode active material includes the graphite and particles (P), the particle (P) content in the negative electrode active material may be 1 mass% or more. With this configuration, even higher capacity can be achieved compared with a case where the negative electrode active material is only graphite. The negative electrode active material may have a particle (P) content of 3 mass% or more. The content may be 50 mass% or less. These lower limits and upper limits can be used in any combinations, as long as it is noncontradictory.
The graphite content in the negative electrode active material may be in the range of 50 to 99 mass%. When the particles (P) include graphite on the surface and/or inside thereof, the graphite thereof is not included in the above-described graphite content. The graphite content accounts for the graphite not included in the particles (P).

[Positive Electrode]

The positive electrode includes a positive electrode mixture. Typically, the positive electrode includes a positive electrode current collector, and a positive electrode active material layer (positive electrode mixture layer) formed on a surface of the positive electrode current collector. The positive electrode mixture layer can be formed by applying a positive electrode slurry in which the positive electrode mixture is dispersed in a dispersion medium on a surface of the positive electrode current collector, and drying the slurry. The dried coating film may be rolled, if necessary. The positive electrode mixture contains a positive electrode active material as an essential component, and may contain a binder, a conductive agent, and the like as an optional component.
For the positive electrode active material, a lithium composite metal oxide can be used. Examples of the lithium composite metal oxide include $Li_aCoO_2$, $Li_aNiO_2$, $Li_aMnO_2$, $Li_aCo_bNi_{1-b}O_2$, $Li_aCo_bM_{1-b}O_c$, $Li_aNi_{1-b}M_bO_c$, $Li_aMn_2O_4$, $Li_aMn_{2-b}M_bO_4$, $LiGPO_4$, and $Li_2GPO_4F$. M is at least one selected from the group consisting of Na, Mg, Sc, Y, Mn, Fe, Co, Ni, Cu, Zn, Al, Cr, Pb, Sb, and B. G includes at least a transition element (e.g., at least one element selected from the group consisting of Mn, Fe, Co, and Ni). Here, $0 \leq a \leq 1.2$, $0 \leq b \leq 0.9$, and $2.0 \leq c \leq 2.3$. Note that the value "a" indicating the molar ratio of lithium is increased or decreased by charging and discharging.
As the binder and the conductive agent, those exemplified for the negative electrode can be used. As the conductive agent, graphite such as natural graphite or artificial graphite may be used.
The shape and thickness of the positive electrode current collector can be selected from the shapes and ranges according to the negative electrode current collector. Examples of the material of the positive electrode current collector may be stainless steel, aluminum, aluminum alloy, and titanium.

[Electrolyte]

For the electrolyte, an electrolyte including a solvent and a solute dissolved in the solvent may be used. The solute is an electrolytic salt that goes through ion dissociation in the electrolyte. The solute may include, for example, a

lithium salt. The component of the electrolyte other than the solvent and solute is additives. The electrolyte may contain various additives.

For the solvent, a non-aqueous solvent is used. As the non-aqueous solvent, for example, cyclic carbonic acid esters, chain carbonic acid esters, cyclic carboxylic acid esters, chain carboxylic acid esters, or the like is used. Examples of the cyclic carbonic acid esters include propylene carbonate (PC), ethylene carbonate (EC), and vinylene carbonate (VC). Examples of the chain carbonic acid esters include diethyl carbonate (DEC), ethyl methyl carbonate (EMC), and dimethyl carbonate (DMC). Examples of the cyclic carboxylic acid esters include γ-butyrolactone (GBL) and γ-valerolactone (GVL). Examples of the chain carboxylic acid esters include methyl acetate, ethyl acetate, propyl acetate, methyl propionate (MP), ethyl propionate (EP), and the like. A kind of non-aqueous solvent may be used singly, or two or more kinds thereof may be used in combination.

Examples of the non-aqueous solvent also include cyclic ethers, chain ethers, nitriles such as acetonitrile, and amides such as dimethylformamide.

As the lithium salt, for example, chlorine-containing acid lithium salts ($LiClO_a$, $LiAlCl_4$, $LiB_{10}Cl_{10}$, etc.), fluorine-containing acid lithium salts ($LiPF_6$, $LiPF_2O_2$, $LiBF_4$, $LiSbF_6$, $LiAsF_6$, $LiCF_3SO_3$, $LiCF_3CO_2$, etc.), fluorine-containing acid imide lithium salts ($LiN(FSO_2)_2$, $LiN(CF_3SO_2)_2$, $LiN(CF_3SO_2)$ $(C_4F_9SO_2)$, $LiN(C_2F_5SO_2)_2$, etc.), and lithium halides (LiCl, LiBr, LiI, etc.) may be used. A kind of lithium salt may be used singly, or two or more kinds thereof may be used in combination.

The electrolyte may have a lithium salt concentration of 1 mol/liter or more and 2 mol/liter or less, or 1 mol/liter or more and 1.5 mol/liter or less. By adjusting the lithium salt concentration within the above-described range, an electrolyte with excellent ion conductivity and suitable viscosity can be produced. However, the lithium salt concentration is not limited to the above-described concentration.

The electrolyte may contain other known additives. Examples of the additive include 1,3-propanesultone, methyl benzene sulfonate, cyclohexylbenzene, biphenyl, diphenyl ether, and fluoro benzene.

[Separator]

A separator may be disposed between the positive electrode and negative electrode. For the separator, a member having a high ion permeability and a suitable mechanical strength and insulating characteristics may be used. The separator may be, for example, a microporous thin film, a woven fabric, or a nonwoven fabric. The separator is preferably made of, for example, polyolefin, such as polypropylene and polyethylene.

An example of the secondary battery (S) includes an outer case, and an electrode group and a non-aqueous electrolyte accommodated in the outer case. The electrode group structure is not particularly limited. An example of the electrode group is formed by winding a positive electrode, negative electrode, and separator with the separator interposed between the positive electrode and negative electrode. Another example of the electrode group is formed by laminating a positive electrode, negative electrode, and separator with the separator interposed between the positive electrode and negative electrode. The form of the secondary battery (S) is not limited, and may be cylindrical, prismatic, coin shape, button shape, or laminate.

The method for producing the secondary battery (S) is not particularly limited, and a known production method can be used, or at least a portion of the known production method can be modified and used.

Examples of the embodiments of the present disclosure are described below in detail with reference to the drawings. For examples of the elements described in the following, the above-described elements can be used. Examples described below can be modified based on the above description. The matters described below can also be applied to the above-described embodiment. In the embodiments described below, elements that are not essential to the secondary battery of the present disclosure can be omitted.

FIG. 1 is a cross sectional view of an example of a negative electrode 2 (negative electrode for secondary battery) that forms a secondary battery of an embodiment of the present disclosure. On a surface of a negative electrode current collector 20, a negative electrode active material layer (second layer) 21 is disposed, and on a surface of the negative electrode active material layer 21, a fire retardant layer (third layer) 22 is disposed. The fire retardant layer 22 includes a fire retardant (R). FIG. 1 is an example in which the fire retardant layer 22 is formed so as to cover the entire surface of the negative electrode active material layer 21.

FIG. 2 is a schematic oblique partially cutaway view of a prismatic secondary battery of an embodiment of the present disclosure. The secondary battery 1 shown in FIG. 2 includes a bottomed prismatic battery case 11, an electrode group 10 and an electrolyte (not shown) accommodated in the battery case 11. The electrode group 10 includes an elongated strip negative electrode, an elongated strip positive electrode, and a separator interposed and preventing direct contact therebetween. The electrode group 10 is formed by winding the negative electrode, positive electrode, and separator with a flat plate winding core as a center, and removing the core.

One end of the negative electrode lead 15 is attached to the negative electrode current collector of the negative electrode by welding, etc. One end of the positive electrode lead 14 is attached to the positive electrode current collector

of the positive electrode by welding, etc. The other end of the negative electrode lead 15 is electrically connected to a negative electrode terminal 13 provided at a sealing plate 12. A gasket 16 is disposed between the sealing plate 12 and the negative electrode terminal 13 to insulate therebetween. The other end of the positive electrode lead 14 is electrically connected to the battery case 11 also working as the positive electrode terminal and connected to the sealing plate 12. A resin-made frame 18 is disposed at an upper portion of the electrode group 10. The frame 18 separates the electrode group 10 from sealing plate 12, and separates the negative electrode lead 15 from the battery case 11. An opening of the battery case 11 is sealed with a sealing plate 12. An injection port 17a is formed at the sealing plate 1 2. An electrolyte is injected from the injection port 17a into the battery case 11. Afterwards, the injection port 17a is plugged with a sealing plug 17.

Examples

The secondary battery of the present disclosure is described in more detail in Examples.

(Example 1)

In this Example, a plurality of types of secondary battery is made as below and evaluated. The plurality of types of secondary battery have different types of fire retardant, and/or, different ratios of the materials in the negative electrode mixture layer.

[Negative Electrode Production]

Graphite was used for the negative electrode active material. First, a negative electrode active material, carboxymethyl cellulose sodium (CMC-Na), styrene-butadiene rubber (SBR), water, and as necessary a fire retardant were mixed at a predetermined mass ratio, to prepare a negative electrode slurry. Next, a coating film was formed by applying the negative electrode slurry on a surface of a copper foil (negative electrode current collector). The coating film was dried and rolled. In this manner, a negative electrode mixture layer was formed on both sides of the copper foil.

[Positive Electrode Production]

For the positive electrode active material, $LiNi_{0.88}Co_{0.09}Al_{0.03}O_2$ was used. The positive electrode active material, polyvinylidene fluoride, N-methyl-2-pyrrolidone (NMP), and acetylene black were mixed at a predetermined mass ratio, thereby preparing a positive electrode slurry.

Then, the positive electrode slurry was applied on a surface of an aluminum foil (positive electrode current collector) to form a coating film. After drying the coating film, the coating film was rolled, thereby forming a positive electrode mixture layer on both sides of the aluminum foil.

[Preparation of electrolyte]

To a solvent mixture including ethylene carbonate (EC) and ethyl methyl carbonate (EMC) at a volume ratio of 3:7, $LiPF_6$ was added as lithium salt, thereby preparing an electrolyte. The concentration of $LiPF_6$ in the non-aqueous electrolyte was set to 1.3 mol/liter.

[Secondary Battery Production]

A lead-tab was attached to each of the electrodes. Then, the positive electrode and negative electrode were wound in a spiral shape with the separator interposed so that the leads were positioned at the outermost peripheral portion. The electrode group was produced in this manner. Then, the electrode group was inserted into a laminate film-made outer case with an aluminum foil as a barrier layer, and vacuum dried. Next, the non-aqueous electrolyte was injected into the outer case, and the opening of the outer case was sealed. A secondary battery was produced in this manner.

In this Example, a plurality of secondary batteries (Batteries A1 to A12, B1, B2, and C1) were produced while changing types of the fire retardant and ratios of the materials in the negative electrode mixture layer. The battery B1 and B2 are Comparative Examples, in which a fire retardant different from the fire retardant (R) including a halogen atom was added. The battery C1 is Reference Example, and no fire retardant was added. The ratios of the materials were changed by changing their mixing ratios when the negative electrode slurry was prepared. The ratios are shown in part later in Table 1. The types of the fire retardant are to be described later.

The produced secondary batteries were evaluated as below.

(1) Capacity retention rate measurement

The discharge capacity of the produced secondary battery was measured as below. First, under a 25°C environment, the battery was charged at a constant current of 0.5 CA until the battery voltage reached 4.2 V, and thereafter, charging was continued at a constant voltage until the electric current value reached 0.02 CA. The charged battery was allowed to stand for 20 minutes, and then discharged at a constant current of 1.0 CA until the battery voltage reached 2.5 V. Afterwards, they were allowed to stand for 20 minutes. The above operation (charge/discharge cycle) was repeated 100 times.

The discharge capacity at an initial discharging was regarded as an initial capacity DC0, and the discharge capacity DC1 of after repeating the above-described charge/discharge cycle for 100 times was measured. The capacity retention rate was determined from the formula below.

$$\text{Capacity retention rate (\%)} = 100 \times DC1/DC0$$

(2) Nail penetration test

The produced secondary battery was subjected to a nail penetration test as described below.

(a) Under a 25°C environment, the battery was charged at a constant current of 0.5 CA until the battery voltage reached 4.2 V, and thereafter, continued to be charged at a constant voltage until the electric current value reached 0.02 CA.

(b) Under a 25°C environment, a pointed end of a round nail (diameter 2.7 mm) was allowed to contact at a center portion of the charged battery in (a), and the battery was pierced at a rate of 1 mm/sec, and immediately after detection of a battery voltage drop by internal short circuit, the round nail penetration was stopped. For 1 second after the short circuit of the battery with the round nail, measurements of the electric current value I of the short circuit electric current and the battery voltage V were continued. Then, the amount of heat generation during 1 second was determined by cumulating the product of the electric current value I and voltage V (electric power) by time.

Some battery production conditions and evaluation results are shown in Table 1. In Table 1, the value (mass ratio) "a" showing the fire retardant content illustrates a fire retardant mass, when setting the negative electrode active material mass in the negative electrode active material layer as 100. In batteries A1 to A12, and B1 and B2, the negative electrode active material content and the fire retardant content were changed, while setting total of the negative electrode active material content and the fire retardant content in the negative electrode active material layer to a constant value. In Table 1, the fire retardant r1 is ethylene-1,2-bispentabromophenyl (SAYTEX (registered trademark)-8010 manufactured by Albemarle Japan). The fire retardant r2 is ethylene bistetrabromophthalimide (halogen atom content 67 mass%). The fire retardant r3 is potassium citriate.

[Table 1]

| Battery | Fire retardant | | Heat generation amount / [J] | Initial capacity / [mAh] | Capacity retention rate / [%] |
|---|---|---|---|---|---|
| | Type | value "a" | | | |
| A1 | r1 | 0.1 | 95.1 | 59.8 | 91.1 |
| A2 | r1 | 0.5 | 90.1 | 60.0 | 91.9 |
| A3 | r1 | 1 | 43.3 | 59.9 | 93.3 |
| A4 | r1 | 3 | 22.2 | 59.8 | 93 |
| A5 | r1 | 5 | 16.7 | 55.3 | 88.5 |
| A6 | r1 | 10 | 14.5 | 48.4 | 84.2 |
| A7 | r2 | 0.1 | 95.0 | 59.9 | 90 |
| A8 | r2 | 0.5 | 91.6 | 59.9 | 91.5 |
| A9 | r2 | 1 | 61.2 | 60.0 | 92.4 |
| A10 | r2 | 3 | 28.8 | 59.8 | 92.1 |
| A11 | r2 | 5 | 20.2 | 55.5 | 84.2 |

(continued)

| Battery | Fire retardant | | Heat generation amount / [J] | Initial capacity / [mAh] | Capacity retention rate / [%] |
|---|---|---|---|---|---|
| | Type | value "a" | | | |
| A12 | r2 | 10 | 15.5 | 46.1 | 83.9 |
| B1 | r3 | 1 | 70.2 | 60.0 | 0 |
| B2 | r3 | 5 | 17.7 | 52.1 | 0 |
| C1 | - | 0 | 97.3 | 59.9 | 91 |

Table 1 shows that the batteries A1 to A12 in which the fire retardant (R) was added, the heat generation amount in the nail penetration test was reduced compared with battery C1, while reduction in the initial capacity and capacity retention rate was suppressed. That is, in the batteries A1 to A12, the amount of heat generation was reduced, and both high charge/discharge performance and high safety were achieved.

The batteries A1 to A5 and batteries A7 to A11 with the value "a" of 0.1 or more and 5 or less achieved the initial capacity and capacity retention rate of about the same or more as that of the battery C1 in which no fire retardant was added. The batteries A3, A4, A9, and A10 with the value "a" of 1 or more and less than 5 kept the initial capacity as that of the battery C1, while obtaining significantly low heat generation amount, , and the capacity retention rate improved more than the battery C1.

With the batteries B1 and B2, the discharge capacity dropped to about 70% of the initial capacity after 70 charge/discharge cycles, and the capacity retention rate after 100 charge/discharge cycles dropped to almost 0% so that charge/discharge could not be performed. In contrast, with the batteries A1 to A12, reduction in the initial capacity and capacity retention rate was suppressed even compared with the battery C1. Thus, when including the fire retardant (R) in the negative electrode active material layer, the battery function was kept even after performing charge/discharge of 100 cycles.

(Example 2)

In this Example, a plurality of non-aqueous electrolyte secondary batteries were produced and evaluated. A non-aqueous electrolyte secondary battery was produced as below.

[Negative Electrode Production]

For the negative electrode active material, graphite, or a mixture of graphite and particles (P) was used. First, a negative electrode active material, carboxymethyl cellulose sodium (CMC-Na), styrene-butadiene rubber (SBR), water, and as necessary a fire retardant were mixed at a predetermined mass ratio, to prepare a negative electrode slurry. Next, a coating film was formed by applying the negative electrode slurry on a surface of a copper foil (negative electrode current collector). The coating film was dried and rolled. In this manner, a negative electrode mixture layer was formed on both sides of the copper foil.

First particles were produced with the following method. First, particles having a composition of SiO (silicon monoxide) were ground and classified to adjust the particle size. Then, surfaces of the produced particles were covered with carbon by a CVD method under an argon atmosphere. Then, they were milled and classified, thereby preparing first particles represented by $SiO_X$.

Second particles were produced with the following method. First, silicon dioxide and lithium carbonate were mixed at an atomic ratio Si/Li of 1.05, and the mixture was baked at 950°C in air for 10 hours, thereby producing lithium silicate represented by formula: $Li_2Si_2O_5$. The obtained lithium silicate was ground to give an average particle size of 10 μm.

Then, the obtained lithium silicate, raw material silicon (3N, average particle size 10 μm), and yttrium oxide ($Y_2O_3$) were mixed at a mass ratio of 50:50:0.0005. The mixture was put into a pot (made of SUS, volume: 500 mL) of a planetary ball mill (manufactured by Fritsch Co., Ltd., P-5), and 24 balls made of SUS (diameter: 20 mm) were placed in the pot. The lid was closed, and the mixture was subjected to grinding at 200 rpm for 50 hours in an inert atmosphere. Next, the powder mixture was taken out, and baked for 4 hours at 800°C in an inert atmosphere while applying pressure by a hot pressing machine, to obtain a sintered body (mother particles) of the mixture.

Thereafter, the sintered product was ground and passed through a 40-μm-mesh, and then mixed with coal-pitch (MCP250, JFE Chemical Corporation). The mixture was baked at 800°C in an inert atmosphere, and the surfaces of the ground particles were covered with conductive carbon to form a conductive layer. The coating mass of the

conductive layer was 5 mass% relative to the total mass of the ground particles. Thereafter, second particles having an average particle size of 5 μm having a conductive layer were obtained using a sieve.

A positive electrode was made in the same manner as in Example 1, and an electrolyte was prepared. A lead-tab was attached to each of the electrodes. Then, the positive electrode and negative electrode were wound in a spiral shape with the separator interposed so that the leads were positioned at the outermost peripheral portion, thereby producing an electrode group with a generally elliptical cross section. Next, the electrode group was accommodated in a bottomed prismatic aluminum-made battery case having an opening. A rectangular sealing plate having a negative electrode terminal at a center surrounded with a gasket is disposed at an opening of the battery case. The negative electrode lead was connected to the negative electrode terminal, and the positive electrode lead was connected to a lower face of the sealing plate, and the end portion of the opening and the sealing plate was laser-welded, to seal the opening of the battery case. Afterwards, the non-aqueous electrolyte was injected from an injection port of the sealing plate into the battery case. In this manner, a prismatic non-aqueous electrolyte secondary battery (theoretical capacity 3000 mAh) as shown in FIG. 2 was produced.

The capacity retention rate measurement and nail penetration test were performed for the produced non-aqueous electrolyte secondary battery, in the same manner as in Example 1. However, in the nail penetration test, instead of deriving the heat generation amount, the battery surface temperature was measured after 1 minute of the battery internal short circuit.

In this Example, types of the fire retardant, types of negative electrode active material, and ratios of the materials in the negative electrode mixture layer were changed and a plurality of secondary batteries (Batteries A13, A14, C2 to C5) were produced. The Batteries C2 to C5 are batteries of Comparative Examples. The ratios of the materials were changed by changing their mixing ratios when the negative electrode slurry was prepared. The ratios are shown in part later in Table 2. Types of the fire retardant are to be described later.

Some battery production conditions and evaluation results are shown in Table 2. The particle (P) content in Table 2 is the particle (P) content in the negative electrode active material. The fire retardant content in Table 2 is the fire retardant content of the negative electrode mixture layer. In Table 2, the fire retardant R1 is ethylene-1 ,2-bispentabromophenyl (SAYTEX (registered trademark)-8010 manufactured by Albemarle Japan). The fire retardant R2 is ammonium polyphosphate.

[Table 2]

| Battery | Particles(P) Content (mass%) | | Fire retardant | Fire retardant Content (mass%) | Battery temperature (°C) | Capacity maintenance rate (%) |
|---|---|---|---|---|---|---|
| | First particles | Second particles | | | | |
| A13 | 3 | 3 | R1 | 1.5 | 590 | 89 |
| A14 | 0 | 9 | R1 | 1.5 | 600 | 89 |
| C2 | 3 | 3 | not provided | 0 | 690 | 89 |
| C3 | 0 | 9 | not provided | 0 | 700 | 89 |
| C4 | 3 | 3 | R2 | 1.5 | 590 | 84 |
| C5 | 0 | 0 | not provided | 0 | 562 | 89 |

A lower battery temperature is better in Table 1. A higher capacity retention rate is better. As is clear from comparison between C2, C3, and C5, when the negative electrode active material includes the particles (P), the battery temperature significantly increases at nail penetration test. Meanwhile, even when the negative electrode active material includes the particles (P), by adding the fire retardant to the negative electrode mixture layer, the battery temperature increase at nail penetration test can be suppressed.

However, in the battery C4 in which ammonium polyphosphate known as a fire retardant for the battery is added, the capacity retention rate greatly decreased. In contrast, the batteries A13 and A14, in which the above-described fire retardant (R) was used, the battery temperature at nail penetration test was low, and a high capacity retention rate was achieved. This is probably because the above-described fire retardant (R) has high reduction endurance than ammonium polyphosphate. Therefore, unlike the battery C4, in the batteries A13 and A14, the capacity retention rate did not decrease even including the fire retardant. Generally, a compound including a halogen atom such as bromine

has high electrophilicity, and when exposed to a negative electrode potential of a non-aqueous electrolyte secondary battery, it is assumed that the decomposition reaction of the compound is caused and the battery characteristics are deteriorated. However, the above-described fire retardant (R) showed, despite the fact that it is a bromine compound, particular stability inside the negative electrode mixture layer, and even when added to the non-aqueous electrolyte secondary battery, battery characteristics did not deteriorate.

(Example 3)

In this Example, a plurality of secondary batteries were made and evaluated as below.

[Negative Electrode Production]

A mixture of graphite and particles (P) was used for the negative electrode active material. First, a negative electrode active material, carboxymethyl cellulose sodium (CMC-Na), styrene-butadiene rubber (SBR), carbon nanotube (CNT), and water were mixed at a predetermined mass ratio, to prepare a negative electrode slurry. For the carbon nanotube, the carbon nanotube having an average diameter of about 1.5 nm and a length of about 1 μm to 5 μm was used. Next, a coating film was formed by applying the negative electrode slurry on a surface of a copper foil (negative electrode current collector). The coating film was dried and rolled. In this manner, a negative electrode active material layer (second layer) was formed on both sides of the copper foil.

Next, a fire retardant (R), polyvinylidene fluoride (PVdF), and N-methyl-2-pyrrolidone (NMP) were mixed at a predetermined mass ratio, thereby preparing a fire retardant layer slurry. The produced slurry was applied to a surface of the negative electrode active material layer, and dried, thereby producing a fire retardant layer (third layer). For the fire retardant (R), ethylene-1,2-bispentabromophenyl (SAYTEX (registered trademark)-8010 manufactured by Albemarle Japan) was used. The basis weight of the fire retardant layer was adjusted to be 3 $g/m^2$. In this manner, a negative electrode in which a first layer having a second layer and a third layer was formed on the negative electrode current collector was obtained.

For the particles (P), the first particles and/or second particles produced in the same manner as in Example 2 were used.

Except for the above, a prismatic non-aqueous electrolyte secondary battery (theoretical capacity 3000 mAh) as shown in FIG. 2 was produced in the same manner as in Example 2, thereby producing secondary batteries A15, A16, C6, and C7.

In the secondary battery A15, the mixing ratio of the components in the negative electrode slurry was set to a mass ratio of graphite : particles (P) : total of CMC-Na and SBR : CNT = 91:6:2.9:0.1 to produce a negative electrode, thereby producing a secondary battery. For the particles (P), the first particles and second particles were mixed at a mass ratio of 1:1 and used.

In the secondary battery A16, the mixing ratio of the components in the negative electrode slurry was set to a mass ratio of graphite : particles (P) : total of CMC-Na and SBR : CNT = 88:9:2.9:0.1, a negative electrode was made in the same manner as in Example 1 except for this, thereby producing a secondary battery. For the particles (P), only the second particles were used.

In the secondary battery C6, a negative electrode was made in the same manner as in the secondary battery A15 except that the fire retardant layer (third layer) was not formed, thereby producing a secondary battery.

In the secondary battery C7, a negative electrode was made in the same manner as in the secondary battery A16 except that the fire retardant layer (third layer) was not formed, thereby producing a secondary battery.

The produced secondary batteries were evaluated as below.

(1) Nail penetration test

The produced secondary battery was subjected to battery temperature measurement after the nail penetration test as described below.

(a) Under a 25°C environment, the battery was charged at a constant current of 0.5 C until the battery voltage reached 4.2 V, and thereafter, charged at a constant voltage until the electric current value reached 0.02 C.

(b) Under a 25°C environment, a pointed end of a round nail (diameter 2.7 mm) was allowed to contact at a center portion of the charged battery in (a), and the battery was pierced at a rate of 1 mm/sec, and immediately after detection of a battery voltage drop by internal short circuit, the round nail penetration was stopped. Then, the battery surface temperature after 1 minute of the battery short circuit was measured.

Some battery production conditions and evaluation results are shown in Table 3. Table 1 shows that the higher

the particles (P) content, the more temperature increase occurs after the nail penetration test. However, with the batteries A15 and A16 in which the third layer including the fire retardant (R) is provided on the surface of the negative electrode active material layer (second layer), with a relatively small basis weight of 3 $g/m^2$, sufficient effects of suppressing temperature increase can be achieved.

[Table 3]

| Battery | Negative Electrode | | Battery temperature after nail penetration /[°C] |
|---|---|---|---|
| | Negative Electrode Active Material Layer particle(P) Content/[wt%] | Fire retardant layer basis weight/[$g/m^2$] | |
| A15 | 6 | 3 | 590 |
| A16 | 9 | 3 | 600 |
| C6 | 6 | 0 | 690 |
| C7 | 9 | 0 | 700 |

(Example 4)

In this Example, a plurality of secondary batteries were made and evaluated as below.

[Negative Electrode Production]

A mixture of graphite and the particles (P) was used for the negative electrode active material. First, a negative electrode active material, carboxymethyl cellulose sodium (CMC-Na), styrene-butadiene rubber (SBR), carbon nanotube (CNT), and water were mixed at a predetermined mass ratio, to prepare a negative electrode slurry. For the carbon nanotube, the carbon nanotube having an average diameter of about 1.5 nm and a length of about 1 μm to 5 μm was used. Next, a coating film was formed by applying the negative electrode slurry on a surface of a copper foil (negative electrode current collector). The coating film was dried and rolled. In this manner, a negative electrode active material layer (second layer) was formed on both sides of the copper foil. The mixing ratio of the components in the negative electrode slurry was set to a mass ratio of graphite : particles (P) : total of CMC-Na and SBR : CNT = 94:5:2.9:0.1.

Then, a fire retardant (R), polyvinylidene fluoride (PVdF), N-methyl -2-pyrrolidone (NMP),and as necessary alumina particles ($Al_2O_3$) were mixed at a predetermined mass ratio, thereby producing a fire retardant layer slurry. The produced slurry was applied to a surface of the negative electrode active material layer, and dried, thereby producing a fire retardant layer (third layer).

For the particles (P), the second particles produced in the same manner as in Example 2 were used.

Except for the above, a non-aqueous electrolyte secondary battery (theoretical capacity 100 mAh) was produced in the same manner as in Example 1. In this Example, a plurality of secondary batteries (Batteries A17 to A20, C8) were produced, while changing the types of the fire retardant included in the fire retardant layer (third layer) and the ratio of the materials in the fire retardant layer. The battery C8 was the battery of Comparative Example, and no fire retardant layer was provided. The ratios of the materials in the fire retardant layer were changed by changing the mixing ratio of them when preparing the fire retardant layer slurry. The ratios are shown in part later in Table 4. Types of the fire retardant are to be described later.

The produced secondary battery was subjected to battery temperature measurement after the nail penetration test in the same manner as in Example 3.

Some battery production conditions and evaluation results are shown in Table 4. The fire retardant content and binder content in Table 4 show the fire retardant and binder (PVdF) contents in the fire retardant layer slurry. In Table 1, the fire retardant r1 is ethylene-1,2-bispentabromophenyl (SAYTEX (trademark)-8010 manufactured by Albemarle Japan). The fire retardant r2 is ethylenebistetraphthalimide.

[Table 4]

| Battery | Fire retardant layer | | | | Battery temperature after nail penetration /[°C] |
|---|---|---|---|---|---|
| | Fire retardant | | Binder /[wt%] | Thickness /[μm] | |
| | Type | Content/[wt%] | | | |
| A17 | r1 | 95 | 5 | 3 | 50 |

(continued)

| Battery | Fire retardant layer | | | | Battery temperature after nail penetration /[°C] |
|---|---|---|---|---|---|
| | Fire retardant | | Binder /[wt%] | Thickness /[μm] | |
| | Type | Content/[wt%] | | | |
| A18 | r1 | 95 | 5 | 10 | 40 |
| A19 | r1 | 60 | 5 | 3 | 60 |
| A20 | r2 | 95 | 5 | 3 | 55 |
| C8 | - | - | - | - | 120 |

Table 4 shows that in the batteries A17 to A20, in which the above-described third layer including the fire retardant (R) is provided on the surface of the negative electrode active material layer (second layer), the temperature increase after nail the penetration test can be suppressed. Table 4 shows that with the third layer thickness of a relatively small of about 3 μm, sufficient effects of suppressing temperature increase can be achieved.

In the battery A19, the fire retardant content is reduced, by replacing a part of the fire retardant included in the fire retardant layer in the battery A17 with alumina particles. Even with a fire retardant content of 60%, sufficient effect of suppressing the temperature increase can be achieved.

[Industrial Applicability]

The present disclosure can be used for secondary batteries.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

1: non-aqueous electrolyte secondary battery, 10: electrode group, 11: battery case, 12: sealing plate, 13: negative electrode terminal, 14: positive electrode lead, 15: negative electrode lead, 16: gasket, 17: sealing plug, 17a: injection port, 18: frame, 20: negative electrode current collector, 21: negative electrode active material layer (second layer), 22: fire retardant layer (third layer)

## Claims

1. A secondary battery comprising: a positive electrode and a negative electrode, wherein

   the negative electrode includes a first layer including a negative electrode active material, and
   the first layer further includes a fire retardant including a halogen atom.

2. The secondary battery of claim 1, wherein the negative electrode active material includes a graphite and particles, the particles including at least one type selected from the group consisting of first particles of silicon oxide represented by a formula $SiO_X$ ($0.5 \leq X < 1.6$), second particles including a lithium silicate phase and silicon particles dispersed in the lithium silicate phase, and third particles including a carbon phase and silicon particles dispersed in the carbon phase.

3. The secondary battery of claim 2, wherein the lithium silicate phase includes lithium silicate represented by a formula $Li_{2Z}SiO_{(2+Z)}$ ($0 < Z < 2$).

4. The secondary battery of claim 2 or 3, wherein the negative electrode active material has a particle content of the at least one type of particles of 1 mass% or more.

5. The secondary battery of any one of claims 2 to 4, wherein the negative electrode active material includes plural

types of particles selected from the group consisting of the first particles, the second particles, and the third particles.

6. The secondary battery of any one of claims 1 to 5, wherein when a mass ratio between the negative electrode active material and the fire retardant in the first layer is represented by, the negative electrode active material: the fire retardant = 100: a, the "a" is larger than 0 and less than 15.

7. The secondary battery of claim 6, wherein the "a" is 1 or more and less than 5.

8. The secondary battery of any one of claims 1 to 5, wherein the first layer includes a second layer including at least the negative electrode active material, and a third layer including at least the fire retardant disposed at a surface of the second layer.

9. The secondary battery of claim 8, wherein the negative electrode active material includes metal lithium.

10. The secondary battery of claim 8 or 9, wherein the third layer has a basis weight of 0.1 $g/m^2$ or more and 10 $g/m^2$ or less.

11. The secondary battery of any one of claims 8 to 10, including a separator interposed between the positive electrode and the negative electrode, and
the third layer is disposed between the second layer and the separator.

12. The secondary battery of any one of claims 8 to 11, wherein the third layer has a thickness of 0.1 μm or more and 10 μm or less.

13. The secondary battery of any one of claims 8 to 12, wherein the third layer has a fire retardant content of more than that of the second layer.

14. The secondary battery of any one of claims 8 to 13, wherein a ratio of the fire retardant contained in the third layer relative to the third layer as a whole is 50% or more by mass.

15. The secondary battery of any one of claims 1 to 14, wherein the first layer includes carbon nanotube.

16. The secondary battery of any one of claims 1 to 15, wherein the fire retardant includes a cyclic structure to which the halogen atom is bonded, and
a ratio of the halogen atom in the fire retardant is 45 mass% or more.

17. The secondary battery of any one of claims 1 to 16, wherein the fire retardant releases the halogen atom at a temperature of 180°C or more.

18. The secondary battery of any one of claims 1 to 17, wherein the fire retardant is at least one selected from the group consisting of ethylene-1,2-bis pentabromo phenyl, ethylenebistetra bromophthalimide, tetrabromobisphenol A, hexabromocyclododecane, 2,4,6-tribromophenol, 1,6,7,8,9,14,15,16,17,17,18,18-dodecachloropentacyclo $(12.2.1.1^{6,9}.0^{2,13}.0^{5,10})$ octadeca-7,15-diene, and tris (2,2,2-trifluoroethyl) phosphate.

FIG. 1

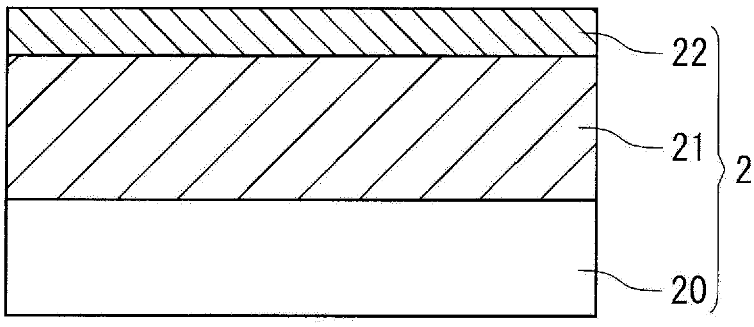

FIG. 2

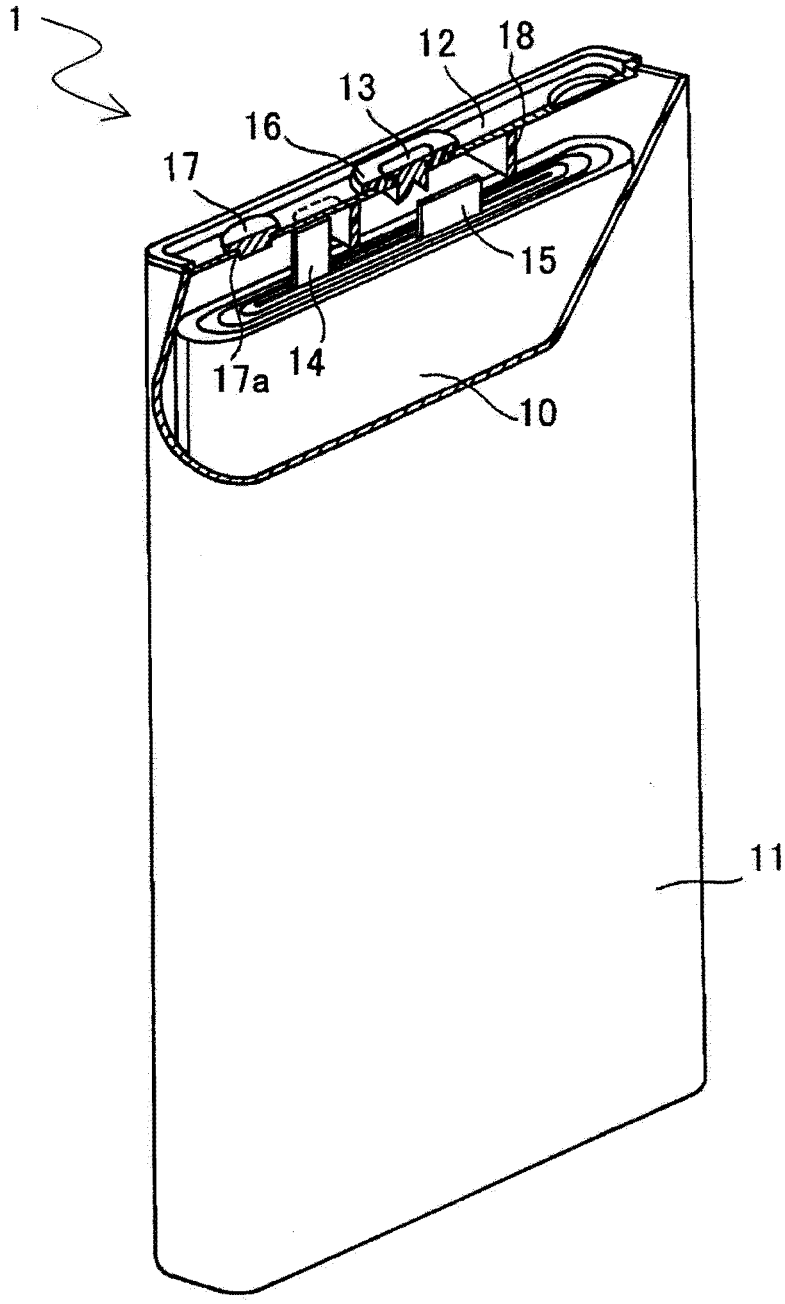

## INTERNATIONAL SEARCH REPORT

International application No.
**PCT/JP2021/035662**

**A. CLASSIFICATION OF SUBJECT MATTER**

***H01M 4/13***(2010.01)i; ***H01M 4/36***(2006.01)i; ***H01M 4/38***(2006.01)i; ***H01M 4/48***(2010.01)i; ***H01M 4/485***(2010.01)i; ***H01M 4/58***(2010.01)i; ***H01M 4/587***(2010.01)i; ***H01M 4/62***(2006.01)i; ***H01M 10/052***(2010.01)i
FI: H01M4/62 Z; H01M4/13; H01M4/36 A; H01M4/36 E; H01M4/38 Z; H01M4/48; H01M4/485; H01M4/58; H01M4/587; H01M10/052

According to International Patent Classification (IPC) or to both national classification and IPC

**B. FIELDS SEARCHED**

Minimum documentation searched (classification system followed by classification symbols)

H01M4/13; H01M4/36; H01M4/38; H01M4/48; H01M4/485; H01M4/58; H01M4/587; H01M4/62; H01M10/052

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 10-172615 A (TOSHIBA BATTERY CO LTD) 26 June 1998 (1998-06-26) paragraphs [0037]-[0058] | 1-10, 12, 13, 15-18 |
| Y | | 16-18 |
| A | | 11, 14 |
| X | JP 2001-196065 A (SONY CORP) 19 July 2001 (2001-07-19) paragraphs [0019], [0021], [0024]-[0031], [0045]-[0050], [0054] | 1-7, 15-18 |
| Y | | 16-18 |
| A | | 8-14 |
| X | KR 10-2020-0004755 A (LG CHEM, LTD.) 14 January 2020 (2020-01-14) claims 1-10, paragraphs [0084], [0191]-[0202] | 1, 8-14 |
| Y | | 16-18 |
| A | | 2-7, 15 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 November 2021** | **22 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/035662**

| Patent document cited in search report | Publication date (day/month/year) | Patent family member(s) | Publication date (day/month/year) |
|---|---|---|---|
| JP 10-172615 A | 26 June 1998 | (Family: none) | |
| JP 2001-196065 A | 19 July 2001 | (Family: none) | |
| KR 10-2020-0004755 A | 14 January 2020 | US 2021/0098791 A1<br>claims 1-10, paragraphs [0060], [0127]-[0135]<br>WO 2020/009435 A1<br>EP 3742527 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010212228 A
- WO 2018179969 A